# EUROPÄISCHE PATENTSCHRIFT

(11) **EP 0 822 128 B1**
(45) Veröffentlichungstag und Bekanntmachung des Hinweises auf die Patenterteilung: **17.10.2001**
(21) Anmeldenummer: 97111353.5
(22) Anmeldetag: 04.07.1997
(51) Int. Cl.: B60T 7/12, B60T 13/68

(54) **Verfahren zum kurzzeitigen Anhalten eines Fahrzeuges**
Method for short term arresting of a vehicle
Méthode pour arrêter un véhicule pendant une courte durée

(30) Priorität: 31.07.1996 DE 19630871
(43) Veröffentlichungstag der Anmeldung: 04.02.1998
(73) Patentinhaber: Bayerische Motoren Werke Aktiengesellschaft, 80788 München (DE)
(72) Erfinder: Siepker, Achim, 80804 München (DE)

(56) Entgegenhaltungen:
- DE-A- 4 236 240
- DE-A- 4 332 459
- US-A- 3 895 698

## Beschreibung

Die Erfindung betrifft ein Verfahren zum kurzzeitigen Anhalten eines Fahrzeugs, welches eine Einrichtung zum Bremseingriff mittels Fremdkraft umfaßt.

Insbesondere bei Oberklasse-Fahrzeugen mit hoher Leistung und Automatikgetriebe ergibt sich aufgrund des steifen Wandlers, des hohen Brennkraftmaschinendrehmoments und der hohen, fahrleistungsorientierten Anfahrübersetzung eine starke Kriechneigung des Fahrzeugs im Stillstand. Ferner kann ein sog. "Bremsknarzen" wegen eines ständigen Slip-Stick-Effekts - dies ist der Übergang von der Haft- zur Gleitreibung und umgekehrt - auftreten. Zur Lösung dieses Problemes wurde in der DE 43 32 459 vorgeschlagen, die Bremswirkung der Fahrzeugbetriebsbremse durch eine separate Einrichtung zu unterstützen. Nachteilig hierbei ist, daß der Fahrzeugbediener das Fahrzeug bei laufendem Motor und eingelegtem Gangwählhebel verlassen kann.

Die separate Einrichtung zur Unterstützung der Bremswirkung erhöht in nachteiliger Weise die Kosten. Im übrigen muß der Fahrzeugbediener bei einem übermäßigen Kriechverhalten des Fahrzeugs eine proportional zu diesem Kriechverhalten dimensionierte Bremskraft auch bei einer zusätzlichen Unterstützung aufbringen.

Aufgabe der vorliegenden Erfindung ist es, ein verbessertes und kostengünstigeres Verfahren zum kurzzeitigen Anhalten eines Fahrzeugs anzugeben.

Diese Aufgabe wird durch die im Anspruch 1 angegebenen Merkmale gelöst.

Eine Vielzahl von heutigen Fahrzeugen besitzen Einrichtungen zur Ausübung eines Bremseingriff mittels Fremdkraft. Solche Einrichtungen sind z. B. eine dynamische Stabilitätskontrolle, eine Anti-Schlupf-Regelung oder das sog. Antiblockiersystem. Mittels der bei diesen Systemen vorgesehenen Ventile und Pumpen ist es möglich, die den einzelnen Rädern zugeordneten Bremsen vom Primär-Bremskreislauf zu trennen und einem Sekundär-Kreislauf zuzuschalten, der üblicherweise mittels einer Pumpe mit Bremsdruck beaufschlagt wird. Je nach Betätigung der Pumpe und den entsprechenden Steuermaßnahmen kann mehr oder weniger Bremsdruck auf die Bremszylinder der entsprechenden Räder gegeben werden. Durch die Nutzung der bereits vorhandenen Einrichtungen ist es nicht mehr notwendig, separate Maßnahmen, wie dies beispielsweise aus der DE 43 32 559 bekannt ist, zu treffen. Auch muß nicht mehr auf die unzulängliche Dosierfähigkeit des Fahrzeugbedieners zurückgegriffen werden, sondern es kann ein auf die jeweiligen Verhältnisse abgestimmter Bremsdruck automatisch bestimmt werden.

Beim erfindungsgemäßen Verfahren wird bei einem bestimmten Maß des Bremseingriffs zunächst der Bremsdruck "eingesperrt". Das erfindungsgemäße Verfahren wird erst unterhalb einer gewissen Fahrzeuggrenzgeschwindigkeit und bei einem über ein vorgegebenes erstes Maß hinausgehenden aktiven Bremseingriff des Fahrzeugbedieners durchgeführt. Als Maß für den aktiven Bremseingriff kann beispielsweise die Betätigung des Bremslichtschalters oder die Erkennung eines Bremsdruckes, welcher einen vorgegebenen Grenzwert überschreitet, dienen. Während der Fremdbremsbetätigung wird der vom Fahrzeugbediener ausgeübte Bremsdruck ständig mit vorgegebenen Bremsdruckwerten verglichen. Sobald der Bremsdruck unterhalb dieser vorgegebenen Bremsdruckwerte abfällt, wird der Bremseingriff abgebrochen. Beispielsweise kann aus dem Erfassen eines gegenüber einem vorgegebenen Grenzwert geringeren Bremsdruck daraus geschlossen werden, daß der Fahrer gerade nicht anhalten möchte.

Sobald der Bremseingriff mittels Fremdkraft erfolgt, liegt an den einzelnen Rädern kein Bremsdruck mehr an, der vom Fahrzeugbediener direkt gesteuert wird, da der Hauptbremszylinder mittels Ventilen abgekoppelt ist.

Es können vorzugsweise auch andere Fahrzeugzustände wie die Überprüfung einer eingelegten Fahrgangstufe (z. B. R, D, 3, 2, 1) oder der Betrieb des Motors abgefragt und bei der Entscheidung, ob eine Fremdbremsbetätigung erfolgen soll, miteinbezogen werden.

Vorzugsweise wird bei Beginn der Fremdbremsbetätigung der aktuelle Bremsdruck gespeichert. Durch Vergleich des nachfolgend aktuellen, vom Fahrzeugbediener verursachten Bremsdruckes mit dem gespeicherten Bremsdruck kann auf ein Vorhaben des Fahrers, z. B. Rangieren oder Starten zu wollen, geschlossen werden.

Gemäß einer vorteilhaften Ausführungsform der Erfindung wird zu Beginn der Fremdbremsbetätigung der Bremsdruck um einen Offsetbetrag erhöht, und zwar vorzugsweise gemäß einer festgelegten Druckaufbaufunktion. Durch ein langsames Erhöhen des Bremsdruckes wird ein sanftes Anhalten des Fahrzeugs sichergestellt, falls dies noch nicht ganz zum Stillstand gekommen ist, wie dies insbesondere bei den passiven Raddrehzahlsensoren notwendig sein kann. Dies vermittelt dem Fahrzeugbediener den Eindruck eines langsam ausrollenden Fahrzeuges.

Bei Beendigung des Fremdbremseingriffs soll der Bremsdruck vorzugsweise gemäß einem festgelegten Verlauf abgebaut werden. Dadurch wird ein ruckartiges Anfahren vermieden.

Das erfindungsgemäße Verfahren wird nachfolgend, auch hinsichtlich weiterer Vorteile und Merkmale, gemäß den beiliegenden Zeichnungen erläutert, in denen
- Fig. 1: ein Diagramm darstellt, aus welchem der Druckaufbau des Bremsdruckes beim Bremseingriff mittels Fremdkraft gemäß einer speziellen Ausführungsform des Verfahrens ersichtlich ist,
- Fig. 2: ein Diagramm darstellt, entsprechend dem die Druckabbaufunktion bei Beendigung des Bremseingriffs ersichtlich ist,
- Fig. 3: ein Diagramm darstellt, in dem der Druck über die Zeit dargestellt ist, in welcher der Bremseingriff mittels Fremdkraft durchgeführt wird,
- Fig. 4: ein Flußdiagramm einer speziellen Ausführungsform des erfindungsgemäßen Verfahrens darstellt und
- Fig. 5: ein Flußdiagramm der Offsetfunktion aus Fig. 4 ist.

Anhand der nachfolgenden Figuren wird eine spezielle Ausführungsform des Verfahrens dargestellt. Dabei wird von einem Kraftfahrzeug mit einer Brennkraftmaschine und einem Automatikgetriebe ausgegangen, bei dem der Bremskreis vom Hauptbremszylinder abgekoppelt und mittels Fremdkraft betrieben werden kann. Ferner sind bei dem Fahrzeug ein Bremsbetätigungsschalter, eine Einrichtung zum Erfassen des Bremsdruckes, ein Fahrzeuggeschwindigkeitssensor und ein Automatikgetriebe-Fahrstufensensor vorgesehen. Alle Erfassungseinrichtungen und Sensoren sind mit einer elektronischen Regeleinrichtung verbunden, die bei den entsprechend vorliegenden Fahrbedingungen den Bremskreislauf vom Hauptbremszylinder abkoppeln und unter Beaufschlagung beispielsweise einer Pumpe an einen sekundären Bremskreis ansteuern kann.

Fremdkraftsysteme, die sich für das erfindungsgemäße Verfahren in besonderer Weise eignen sind beispielsweise die sog. Anti-Schlupf-Regelung und die dynamische Stabilitätsregelung, welche über Druckhalteventile und Pumpaggregate verfügen. Die vorgenannten Regelungsmöglichkeiten sind gut bekannt. Auf sie wird im folgenden nicht eingegangen.

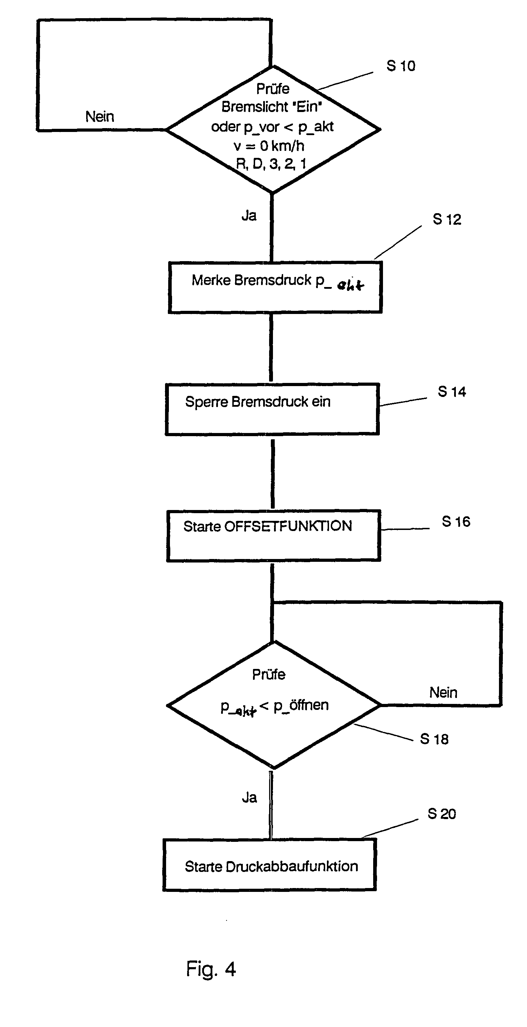

Beim Betrieb des Verfahrens wird gemäß Schritt 10 aus Fig. 4 fortwährend festgestellt, ob eine Gangstufe R, D, 3, 2 oder 1 eingelegt ist und die Geschwindigkeit 0 km/h entspricht. Hinsichtlich der Geschwindigkeit muß angemerkt werden, daß die Raddrehzahlauflösung etwa bei 0,75 km/h liegen kann, so daß auch dann eine Geschwindigkeit von 0 km/h festgestellt wird, wenn das Fahrzeug noch geringfügig rollt. Eine Maßnahme, welche der vorgegebenen Tatsache Rechnung trägt, wird nachfolgend noch dargestellt werden.

Gemäß Schritt 10 kann alternativ festgestellt werden, ob der Bremslichtschalter auf "ein" ist oder ein bestimmter Bremsdruckwert durch Betätigen der Betriebsbremse durch den Fahrzeugbediener überschritten wird (p_vor < p_akt).

Ist eine dieser Bedingungen nicht erfüllt, so wird zum Anfang zurückverzweigt und erneut geprüft ("Nein" in Fig. 4).

Sind alle vorgenannten Bedingungen erfüllt, so wird in Schritt 12 der aktuelle Bremsdruck p_akt abgespeichert.

In Schritt 14 wird durch Schließen von Ventilen im Bremskreislauf der Bremsdruck "eingesperrt", d. h. vom Hauptbremszylinder abgekoppelt. Ist der Bremskreis vom Hauptzylinder abgekoppelt, kann er vom Sekundärkreis mit Bremsdruck beaufschlagt werden.

Anschließend wird gemäß Schritt 16 in Fig. 4 eine "Offsetfunktion" gestartet. Wie vorgenannt bereits erwähnt, erreicht die Raddrehzahlauflösung etwa 0,75 km/h. Um zu verhindern, daß das System bei den vorgenannten Aktivierungsbedingungen den Bremsdruck mit den Hydraulikventilen einsperrt, wenn das Fahrzeug noch rollt und der Fahrer auch diesen Zustand wünscht, wird die "Offsetfunktion" ausgeführt.

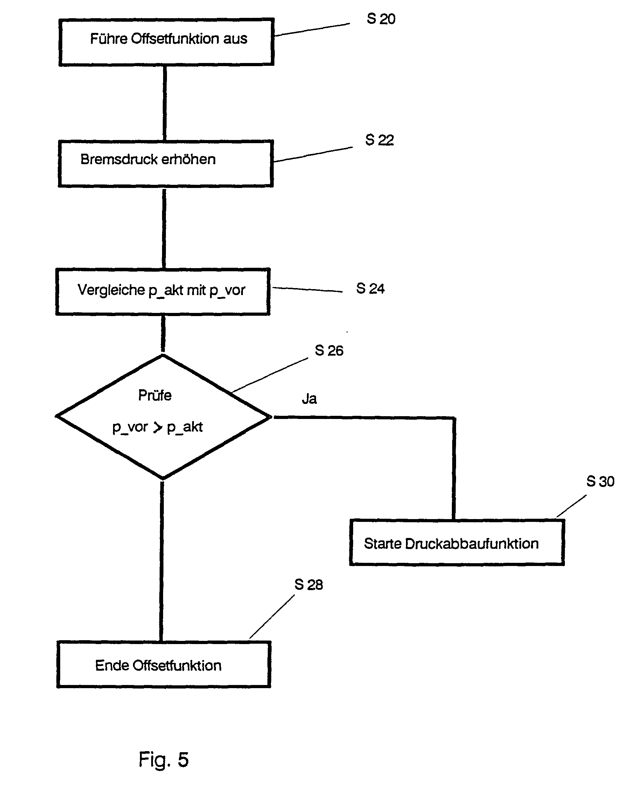

Gemäß der Fig. 5 wird in Schritt 22 der Bremsdruck mittels einer Rückförderpumpe um einen Offsetbetrag p_Offset erhöht, gemäß einer Druckaufbaufunktion p_akt = f (t). Dabei wird der Druck um einen kleinen Betrag langsam erhöht, so daß das Fahrzeug langsam ausrollen kann. Der Fahrer empfindet den geringfügigen Druckaufbau als erhöhtes Reibmoment, welches ein sanftes Ausrollen zur Wirkung hat. Während der Ausführung der Offsetfunktion von Fig. 5 wird der vom Fahrer erzeugte Bremsdruck ständig überwacht. Findet eine Druckreduzierung durch den Fahrer unter einen vorgegebenen Wert statt (Schritt 26, p_vor > p_akt), so erfolgt ein sofortiger Abbruch des Verfahrens durch einen entsprechenden Druckabbau (Schritt 30 in Fig. 5). Wird während der Ausführung der Offsetfunktion keine Wegnahme des Bremspedaldruckes vom Fahrer festgestellt, so wird die Offsetfunktion gemäß Schritt 28 bei Erreichen des vorgegebenen Druckes beendet und zu Schritt 16 (Fig. 4) zurückgekehrt.

Die Offsetfunktion bewirkt ein leichtes Wegsinken des Bremspedals, was eine Rückmeldung für den Fahrer darstellt. Anschließend wird in Schritt 18 aus Fig. 4 fortwährend geprüft, ob der vom Fahrzeugbediener ausgeübte Bremsdruck p_akt kleiner ist als ein Grenz-Bremsdruck, bei dem das Verfahren beendet werden soll p_öffnen. Ist dies nicht der Fall, wird solange geprüft, bis diese Bedingung vorliegt (ja).

Bei Vorliegen der vorgenannten Bedingung wird in Schritt 20 die "Druckabbaufunktion" gestartet.

Wird in Schritt 10 alternativ die Prüfung durchgeführt, ob der Bremslichtschalter "ein" ist, so wird natürlich in Schritt 20 überprüft, ob der Bremslicht deaktiviert wird.

Bei Überprüfung des Bremsdruckes sollte die Druckabbaufunktion bei einem Bremsdruck p_öffnen > 0 bar eingeleitet werden, damit mit dem noch anstehenden Rest-Kriechmoment ein dosierter Rangiervorgang möglich ist.

Über die Bremspedaldruckschwelle, die durch den Öffnungsdruck p_öffnen bestimmt wird, erfolgt eine Früherkennung des Fahrerwunsches beispielsweise in Richtung von "Anfahren" und "Rangieren". Die Information kann an das Automatikgetriebesteuerung AGS weitergegeben werden. Es ist möglich, das Automatikgetriebe während der Ampelstopfunktion in eine andere, sparsamere Gangstufe zu schalten und rechtzeitig über die Information der Früherkennung zurück in eine, dem Anfahrvorgang entsprechende Gangstufe zurückzuschalten. Diese Funktion bewirkt eine Energiereduzierung beim kurzzeitigen Anhalten des Fahrzeuges. Ein Nebeneffekt dabei ist wiederum eine Reduzierung des Slip-Stick-Effektes.

Ein Rangierwunsch kann zusätzlich über die Aktivierung einer Park-Distanz-Regelung erkannt werden. In Abhängigkeit dieser Funktion kann auf eine andere Bremslösefunktion und evtl. auf eine andere Wandlerfunktion umgeschaltet werden, um einen möglichen Zielkonflikt zwischen Rangierbarkeit mit Automatikkriechmoment, geringen Bremshaltekräften im stop-and-go-Verkehr und niedrigen Energieverbrauch zu begegnen. Zur Anpassung an Steigung und Gefälle kann auch noch der Neigungswinkel verarbeitet werden.

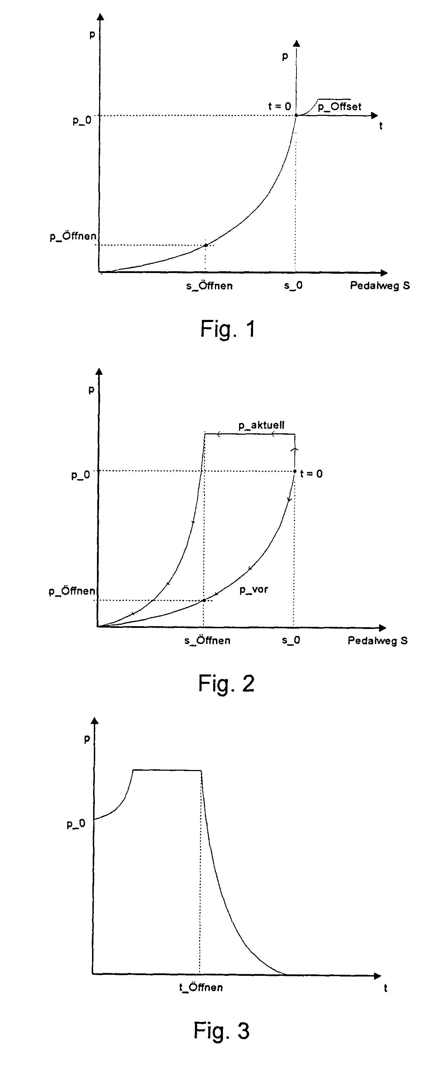

Fig. 1 zeigt ein Diagramm, in dem der Druck p über dem Pedalweg S aufgetragen ist. Bei einem Pedalweg S, ab dem ein Bremslichtschalter betätigt wird, erhöht sich der Druck entsprechend der in Fig. 1 angegebenen Kurve zwischen dem Pedalweg S = 0 und S_0. S_0 ist der Bremspedalweg, welcher zu einer Unterdrückung des Kriechmoments gerade ausreicht. Wird ein Pedalweg von S_0 erreicht, so wird das vorgenannt beschriebene Verfahren durchgeführt. Der Bremskreis wird vom Hauptbremszylinder abgekoppelt und der Sekundär-Bremskreis tritt in Aktion. Zu diesem Zeitpunkt t = 0 wird der Bremsdruck eingesperrt und entsprechend einer vorgegebenen Funktion f (t) geringfügig erhöht, um - wie vorgenannt bereits erwähnt - der Tatsache Rechnung zu tragen, daß auch bei einer Geschwindigkeitserfassung von 0 km/h ein gewisses Rollen des Fahrzeugs noch möglich ist. Nach Erreichen einer bestimmten Zeit ist der "Offsetdruckwert" erreicht und wird solange gehalten, bis der Bremspedalweg unter einen Wert s_öffnen (= p_öffnen) sinkt. Dann wird ein Druckabbausignal erzeugt.

In Fig. 2 ist eine Darstellung angegeben, die den Druckabbau näher charakterisiert. Ab dem bestimmten Pedalweg S_0 wird der Druck über die Offsetfunktion erhöht und erst dann wieder abgebaut, wenn der Pedalwert einen vorgegebenen Grenzwert s_öffnen unterschreitet. Bei Unterschreitung dieses Grenzwerts s_öffnen erfolgt die Bremsdruckreduzierung gemäß einem vorgegebenen Verlauf.

Der zeitliche Gesamtvorgang bezüglich des Bremseingriffs mittels Fremdkraft ist Fig. 3 zu entnehmen. Bei der Durchführung des vorgenannt beschriebenen Verfahrens wird der Hauptbremszylinder von den Bremsen abgekoppelt, der Sekundär-Bremskreislauf aktiviert und über die Offsetfunktion auf den Offsetdruckwert gegangen. Dieser Druckwert wird solange gehalten, bis ein Druckabbausignal erzeugt wird; und zwar zum Zeitpunkt t_{öffnen}. Ab diesem Zeitpunkt fällt der Bremsdruck entsprechend einer vorgegebenen Kurve ab. Hat der Bremsdruck einen bestimmten Wert unterschritten bzw. ist auf 0 bar zurückgekehrt, so wird wieder auf normalen Betrieb geschaltet.

Auf einfache Weise wird durch das erfindungsgemäße Verfahren somit eine Verbesserung eines kurzzeitigen Anhaltens beispielsweise beim stop-and-go-Betrieb sichergestellt. Durch die Reduzierung der Haltekräfte wird ein zusätzlicher Komfortgewinn erreicht. Durch Anpassung der Wandlerfunktion kann der Energieverbrauch reduziert werden. Im übrigen kann das erfindungsgemäße Verfahren kostengünstig realisiert werden, da kein Mehraufwand an technischen Einrichtungen in einem Fahrzeug, welches bereits über die Möglichkeit eines Bremseingriffs über Fremdkraft verfügt, erforderlich ist.

## Patentansprüche

1. Verfahren zum kurzzeitigen Anhalten eines Fahrzeugs, welches eine Einrichtung zum Bremseingriff mittels Fremdkraft umfaßt, wobei ein Bremseingriff mittels Fremdkraft durchgeführt wird, wenn die Fahrzeuggeschwindigkeit einen bestimmten Grenzwert unterschreitet und ein aktiver Bremseingriff des Fahrzeugbedieners über ein vorgegebenes erstes Maß hinaus erfolgt, **dadurch gekennzeichnet, daß** der Bremseingriff mittels Fremdkraft beendet wird, wenn der aktive Bremseingriff des Fahrzeugbedieners unter ein vorgegebenes zweites Maß fällt.

2. Verfahren nach Anspruch 1,
**dadurch gekennzeichnet, daß** auf den über das vorgegebene erste Maß hinaus erfolgenden Bremseingriff durch die Betätigung des Bremslichtschalters oder die Überschreitung eines Bremsdruckgrenzwertes durch den vom Fahrzeugbediener hervorgerufenen Bremsdruck geschlossen wird.

3. Verfahren nach Anspruch 1 oder 2,
**dadurch gekennzeichnet, daß** zusätzlich zur Fahrzeuggeschwindigkeit und dem Maß für die Bremsbetätigung durch den Fahrzeugbediener andere Fahrzeugzustände oder Umgebungszustände abgefragt werden, die je nach Vorgabe einen entsprechenden Einfluß auf die Fremdbremsbetätigung haben.

4. Verfahren nach einem der vorhergehenden Ansprüche,
**dadurch gekennzeichnet, daß** zu Beginn der Fremdbremsbetätigung der aktuelle Bremsdruck gespeichert wird.

5. Verfahren nach einem der vorhergehenden Ansprüche,
**dadurch gekennzeichnet, daß** zu Beginn der Fremdbremsbetätigung der Bremsdruck um einen Offset-Betrag entsprechend einer festgelegten Druckaufbaufunktion erhöht wird.

6. Verfahren nach einem der vorhergehenden Ansprüche,
**dadurch gekennzeichnet, daß** bei Beendigung des Fremdbremseingriffs der Bremsdruck gemäß einem festgelegten Verlauf abgebaut wird.

## Claims

1. A method of briefly stopping a vehicle having a means for brake engagement by independent power, wherein the brake is engaged by independent power when the vehicle speed falls below a given limiting value and the driver actively engages the brake above a set first value, **characterised in that** the brake engagement by independent power is brought to an end when the active brake engagement by the driver falls below a set second value.

2. A method according to claim 1, **characterised in that** brake engagement above the set first value is inferred if the stop switch is actuated or if the brake pressure produced by the driver exceeds a limiting value.

3. A method according to claim 1 or 2, **characterised in that** in addition to the vehicle speed and the value or extent of brake actuation by the driver, other states of the vehicle or states of the environment are interrogated if, after being preset, they have an influence on the independent brake actuation.

4. A method according to any of the preceding claims, **characterised in that** at the beginning of the independent brake actuation the actual brake pressure is stored.

5. A method according to any of the preceding claims, **characterised in that** at the beginning of the independent brake actuation the brake pressure is increased by an offset amount corresponding to a fixed pressure build-up function.

6. A method according to any of the preceding claims, **characterised in that** at the end of the independent brake engagement the brake pressure is reduced in accordance with a set curve.

## Revendications

1. Procédé pour retenir pendant une courte durée un véhicule comportant une installation pour agir sur les freins à l'aide d'une force extérieure, dans lequel une action sur les freins se fait à l'aide d'une force extérieure lorsque la vitesse du véhicule passe en dessous d'une valeur limite définie, et lorsqu'une intervention active sur le frein par le conducteur dépasse une première mesure prédéfinie,
**caractérisé en ce que**
l'action sur le frein est terminée par la force extérieure, si l'action active sur le frein par le conducteur descend en dessous d'une seconde mesure prédéfinie.

2. Procédé selon la revendication 1,
**caractérisé en ce que**
l'actionnement de l'interrupteur des feux de frein ou le dépassement d'une valeur limite de pression de frein par la pression de frein engendrée par le conducteur permet de conclure qu'il y a une action de frein dépassant une première mesure.

3. Procédé selon la revendication 1 ou 2,
**caractérisé en ce qu'**
en plus de la vitesse du véhicule et le degré d'actionnement du frein par le conducteur, on interroge d'autres états du véhicule ou états environnants, qui selon ce qui est prédéfini, ont une influence correspondante sur les actionnements extérieurs sur le frein.

4. Procédé selon l'une quelconque des revendications précédentes,
**caractérisé en ce qu'**
au début de l'actionnement extérieur sur le frein, on mémorise la pression actuelle de frein.

5. Procédé selon l'une quelconque des revendications précédentes,
**caractérisé en ce qu'**
au début de l'actionnement extérieur sur le frein, on augmente la pression de frein d'une valeur Offset selon une fonction d'établissement de pression, définie.

6. Procédé selon l'une quelconque des revendications précédentes,
**caractérisé en ce qu'**
à la fin de l'action extérieure sur le frein, on établit la pression de frein selon une courbe fixée.
